Europäisches Patentamt

European Patent Office

Office européen des brevets

(11) Numéro de publication: **0 099 774 B2**

(12) **NOUVEAU FASCICULE DE BREVET EUROPEEN**

(45) Date de publication de nouveau fascicule du brevet: 22.03.95

(21) Numéro de dépôt: **83401223.9**

(22) Date de dépôt: **14.06.83**

(51) Int. Cl.6: **C08F 10/00**, C08F 4/64

(54) **Procédé pour la polymérisation et la copolymérisation des alpha-oléfines en lit fluidisé.**

(30) Priorité: **24.06.82 FR 8211057**
         **24.06.82 FR 8211053**
         **24.06.82 FR 8211055**
         **24.06.82 FR 8211056**

(43) Date de publication de la demande:
   **01.02.84 Bulletin 84/05**

(45) Mention de la délivrance du brevet:
   **01.10.86 Bulletin 86/40**

(45) Mention de la décision
   concernant l'opposition:
   **22.03.95 Bulletin 95/12**

(84) Etats contractants désignés:
   **AT BE DE FR GB IT NL SE**

(56) Documents cités:
   **EP-A- 0 024 933    EP-B- 0 000 007**
   **DE-A- 2 700 566    DE-A- 3 032 318**
   **GB-A- 2 006 227    GB-B- 1 434 543**

   **L.L.Böhm, "Ethylene polymerization process with a highly active Ziegler-Natta catalyst : Kinetics Polymer, 1978, Vol.19, May, pages 553-561**

(73) Titulaire: **BP Chimie Société Anonyme**
   **Tour Neptune - La Défense 1**
   **20, place de Seine**
   **F-92400 Courbevoie (FR)**

(72) Inventeur: **Bailly, Jean Claude**
   **Les Platanes**
   **Rue E. Amavet**
   **F-13500 Martigues (FR)**
   Inventeur: **Havas, Laszlo**
   **8 Bd. Gérard Philipe**
   **F-13500 Martigues (FR)**
   Inventeur: **Sandis, Stylianos**
   **1, avenue de la Durance**
   **F-13117 Lavera (FR)**
   Inventeur: **Blaya, Alain**
   **5, Lotissement le Mistral**
   **La Roche Percée**
   **F-13500 Martigues (FR)**
   Inventeur: **Crouzet, Pierre**
   **Le Haut Touret**
   **F-13500 Martigues (FR)**

(74) Mandataire: **Patentanwälte Beetz - Timpe - Siegfried Schmitt-Fumian - Mayr**
   **Steinsdorfstrasse 10**
   **D-80538 München (DE)**

EP 0 099 774 B2

Rank Xerox (UK) Business Services
(3.10/3.09/3.3.3)

P.Galli, L. Luciani, G. Cecching, "Advances in the Polymerization of Polyolefins with Coordination Catalyst"; Die angewandte Makromolekulare Chemie 94 (1981), pages 63-89 (Nr.1441)

## Description

La présente invention concerne un procédé de polymérisation ou de copolymérisation d'alpha-oléfines en phase gazeuse au moyen d'un lit fluidisé et des prépolymères et polymères correspondants.

On sait que les systèmes catalytiques de polymérisation et de copolymérisation d'alpha-oléfines, dits Ziegler-Natta, sont obtenus par la combinaison, d'une part, d'un catalyseur qui est un composé de métal de transition appartenant aux groupes IV, V et VI de la Classification Périodique des éléments, et, d'autre part, d'un cocatalyseur qui est un composé organométallique d'un métal des groupes I à III de cette Classification. Les composés les plus utilisés sont, d'une part, les dérivés halogénés du titane et, d'autre part, les composés d'alcoylaluminium ou des chlorures d'alcoylaluminium.

Il est connu de polymériser en phase gazeuse des alpha-oléfines, par exemple dans un réacteur à lit fluidisé dans lequel le polymère solide en cours de formation est maintenu à l'état fluidisé au moyen d'un courant gazeux ascendant contenant les alpha-oléfines à polymériser. Le mélange gazeux sortant du réacteur est généralement refroidi avant d'être recyclé dans le réacteur, additionné d'une quantité complémentaire d'alpha-oléfines. La polymérisation peut être effectuée à l'aide d'un système catalytique de type Ziegler-Natta, introduit d'une manière continue ou semi-continue dans le réacteur à lit fluidisé. Le soutirage du polymère produit peut également être effectué de façon continue ou semi-continue.

Les deux constituants du système catalytique - le catalyseur et le cocatalyseur - peuvent être mis en contact soit avant leur introduction dans le réacteur à lit fluidisé, soit à l'intérieur même de ce réacteur. L'expérience a, cependant, montré que, dans ce cas et quelle que soit la méthode utilisée, la réaction de polymérisation démarre très brutalement, dès l'introduction du catalyseur ou du système catalytique dans le réacteur à lit fluidisé, créant d'une part des emballements localisés de la réaction dans le lit fluidisé et d'autre part l'éclatement des particules solides de catalyseur dont la granulométrie n'est plus contrôlée. Ces emballements localisés de la réaction produisent des échauffements et conduisent généralement à la formation d'agglomérats et à des prises en masse du polymère, à l'intérieur du lit fluidisé.

Il est également connu d'introduire dans le réacteur à lit fluidisé le catalyseur associé à un support granulaire inorganique. Ce support granulaire inorganique est généralement constitué d'oxydes réfractaires, tels que l'alumine, la silice, le silicate d'aluminium ou la magnésie. Le catalyseur est habituellement déposé ou imprégné ou précipité sur ce support granulaire, ce qui confère audit catalyseur des propriétés spécifiques et intéressantes pour la technique de la polymérisation en lit fluidisé, concernant notamment la granulométrie, la résistance à l'abrasion et l'activité du catalyseur. D'une façon générale, il est également connu que la dispersion d'un catalyseur sur un support granulaire de ce type s'accompagne d'un accroissement de l'activité catalytique, notamment au démarrage de la réaction de polymérisation. Le problème, alors lié à ce surcroit d'activité, peut être partiellement résolu en dispersant le catalyseur sur une quantité suffisamment importante de support. Malheureusement, les polymères ou copolymères ainsi obtenus ont des teneurs en résidus inorganiques relativement élevées, ce qui nuit à leurs propriétés.

Il est encore connu d'utiliser des systèmes catalytiques très actifs, comportant des catalyseurs à base de magnésium et de métaux de transition, ces catalyseurs pouvant être obtenus par réaction de composés organomagnésiens et de composés de métaux de transition ou par broyage de composés du magnésium et de composés de métaux de transition. Compte tenu de leur granulométrie et de leur très grande activité, ces catalyseurs peuvent être introduits dans le réacteur de polymérisation à lit fluidisé sous forme d'un prépolymère. Afin d'éviter des échauffements, la vitesse de fluidisation doit être relativement élevée, en particulier, comprise entre environ 5 et 10 fois la vitesse minimum de fluidisation, c'est-à-dire généralement comprise entre environ 40 et 80 cm/s. Or, les prépolymères utilisés jusqu'à présent présentent un diamètre moyen en masse trop faible et/ou une distribution granulométrique trop large pour pouvoir utiliser des vitesses de fluidisation aussi élevées que celles préconisées, sans éviter un entraînement intense des particules hors du lit fluidisé, En réalité, l'usage de tels prépolymères nécessite la présence d'une zone dite de désengagement des particules, située au-dessus du lit fluidisé, ayant un volume très important, ainsi que des dispositifs appropriés pour arrêter et recycler les fines particules entraînées hors du lit fluidisé, tels que des cyclones et des filtres.

Afin d'éviter ces entraînements, il a été, également, proposé de limiter la vitesse de fluidisation à des valeurs relativement basses, par exemple, inférieures à 3 fois la vitesse minimum de fluidisation, c'est-à-dire inférieure à environ 25 cm/s. Toutefois, afin d'éliminer correctement la chaleur de réaction, il est connu, selon l'art antérieur, d'adjoindre un système d'agitation mécanique et/ou un dispositif d'introduction, de récupération et de recyclage d'un ou plusieurs liquides facilement volatils.

Il a été, maintenant, trouvé qu'il est possible d'éviter les inconvénients précités et d'effectuer en continu la polymérisation ou la copolymérisation d'alpha-oléfines en phase gazeuse, au moyen d'un lit fluidisé, dans des appareillages simplifiés, permettant d'obtenir des polymères ou des copolymères d'alpha-oléfines de qualités très diverses et de teneurs très faibles en résidus inorganiques.

L'invention a donc pour objet un procédé amélioré de fabrication de polyoléfines comportant, dans une première étape, la mise en contact d'une ou plusieurs alpha-oléfines avec un système catalytique de type Ziegler-Natta comprenant, d'une part, un catalyseur se présentant sous la forme de particules solides et contenant essentiellement des atomes d'halogène, de magnésium et de métaux de transition appartenant aux groupes IV, V et VI de la Classification Périodique des éléments, et, d'autre part, un cocatalyseur constitué de composés organométalliques des métaux des groupes I à III de cette Classification, pour obtenir un prépolymère sous forme de particules solides, puis, dans une seconde étape, la mise en contact dudit prépolymère avec une ou plusieurs alpha-oléfines dans des conditions de polymérisation ou de copolymérisation en phase gazeuse, au moyen d'un lit fluidisé, pour produire un polymère ou un copolymère d'alpha-oléfines directement sous forme de poudre, le procédé étant caractérisé en ce que :

a) le prépolymère contient, par gramme, entre $2 \times 10^{-3}$ et $10^{-1}$ mmol de métal de transition et se présente sous la forme de particules ayant un diamètre moyen en masse compris entre 80 et 300 microns et une distribution granulométrique telle que le rapport du diamètre moyen en masse, Dm, au diamètre moyen en nombre, Dn, est inférieur ou égal à 3,

b) le polymère ou le copolymère d'alpha-oléfines contient, par gramme, moins de $5 \times 10^{-4}$ mmol de métal de transition et se présente sous la forme d'une poudre constituée de particules ayant un diamètre moyen en masse compris entre 300 de préférence 400, et 1 500 microns.

Les poudres de prépolymères d'alpha-oléfines selon l'invention sont destinées à la polymérisation ou copolymérisation des alpha-oléfines en phase gazeuse et contrement un système catalytique actif comprenant un catalyseur à base de magnésium, d'halogène et d'un métal de transition des groupes IV, V et VI de la Classification Périodique des éléments, et un cocatalyseur à base d'au moins un composé organoaluminique, en quantité telle que le rapport atomique Al/métal de transition est compris entre 0,5 et 200 et que la teneur en métal de transition est de $2 \times 10^{-3}$ à $10^{-1}$ mmol de métal de transition par gramme de prépolymère, ces poudres de prépolymères étant constituées de particules de diamètre moyen en masse compris entre 80 et 300 $\mu$m et d'une distribution granulométrique telle que le rapport Dm/Dn est inférieur ou égal à 3.

Les poudres d'homopolymères de l'éthylène ou de copolymères de plus de 50 % en mol d'éthylène avec au moins une alpha-oléfine comportant de trois à huit atomes de carbone selon l'invention contrement du titane, ont une teneur inférieure à $5 \times 10^{-4}$ mmol de titane par gramme, une teneur en résidus inorganiques inférieure à 350 ppm et une masse volumique apparente comprise entre 0,45 et 0,52 g/cm$^3$, et sont constituées de particules de diamètre moyen en masse compris entre 600 et 1200 $\mu$m et d'une distribution granulométrique telle que le rapport Dm/Dn est inférieur ou égal à 3,5.

Les catalyseurs utilisés selon l'invention peuvent être obtenus par divers procédés, notamment par ceux selon lesquels un composé de magnésium est précipité en même temps qu'un ou plusieurs composés de métaux de transition. En particulier, ils peuvent être obtenus par réaction d'un composé organomagnésien de type réactif de Grignard et d'un composé de métal de transition utilisé à sa valence maximum. Une autre technique, également connue, consiste à faire réagir du magnésium métal avec un halogénure d'alcoyle et un composé de métal de transition à son état de valence maximum. La précipitation est généralement accompagnée par la réduction du composé de métal de transition en un composé où le métal de transition est à l'une de ses valences inférieures. Compte tenu des propriétés granulométriques de ces catalyseurs, il est nécessaire de procéder à une opération de sélection granulométrique telle qu'un tamisage du catalyseur et/ou du prépolymère lui-même, afin d'obtenir la distribution granulométrique désirée, étant connu que la distribution granulométrique du prépolymère est sensiblement identique à celle du catalyseur dont il est issu.

On peut également utiliser un catalyseur constitué d'un composé de métal de transition, déposé sur un support constitué d'un composé du magnésium, tel que le chlorure de magnésium, l'hydroxychlorure de magnésium, les alcoolates de magnésium, ou l'acétate de magnésium. On peut, notamment, utiliser un support tel que ceux obtenus par broyage de chlorure de magnésium anhydre ou par réaction de précipitation d'un composé organomagnésien et d'un composé halogéné. Dans ce cas, également, une opération de sélection granulométrique, par exemple, de tamisage du support, du catalyseur et/ou du prépolymère doit généralement être pratiquée.

Selon un mode de réalisation préféré de l'invention, il est possible d'éviter l'opération de sélection granulométrique précipitée, en utilisant, comme support de catalyseur, des particules de chlorure de magnésium obtenues par réaction d'un composé organomagnésien et d'un composé organique chloré, en respectant les conditions suivantes :

- l'organomagnésien est soit un dialcoylmagnésium de formule $R_1MgR_2$, soit un dérivé d'organomagnésien de formule $R_1MgR_2$, $xAl(R_3)_3$, formules dans lesquelles $R_1$, $R_2$ et $R_3$ sont des radicaux alcoyle identiques ou différents ayant de 2 à 12 atomes de carbone et x est compris entrer 0,001 et 10, et, de préférénce, compris entre 0,01 et 2 ;
- le composé organique chloré est un chlorure d'alcoyle de formule $R_4Cl$, dans laquelle $R_4$ est un radical alcoyle secondaire ou de préférence tertiaire ayant de 3 à 12 atomes de carbone ;
- la réaction est effectuée en présence d'un composé donneur d'électron qui est un composé organique comprenant au moins un atome d'oxygène, de soufre, d'azote et/ou de phosphore. Il peut être choisi parmi une grande variété de produits tels que les amines, les amides, les phosphines, les sulfoxydes, les sulfones ou les éthers. Parmi les composés donneurs d'électron, on peut choisir notamment un éther aliphatique de formule $R_5OR_5$, dans laquelle $R_5$ et $R_6$ sont des radicaux alcoyle identiques ou différents ayant de 1 à 12 atomes de carbone. De plus, les divers réactifs mis en jeu pour la préparation d'un tel support peuvent être utilisés dans les conditions suivantes :
- le rapport molaire $R_4Cl/R_1MgR_2$ est compris entre 1,5 et 2,5 et, de préférence, compris entre 1,85 et 2,2 ;
- le rapport molaire $R_4Cl/R_1MgR_2$, $xAl(R_3)_3$ est compris entre 1,5 (1 + 3/2•x) et 2,5 (1 + 3/2•x) et, de préférence, compris entre 1,85 (1 + 3/2•x) et 2,2 (1 + 3/2•x) ;
- le rapport molaire entre le composé donneur d'électron et le composé organomagnésien ($R_1MgR_2$ ou $R_1MgR_2$, $xAl(R_3)_3$) est compris entre 0,01 et 2 et, de préférence, compris entre 0,01 et 1 ;
- la réaction entre le composé organomagnésien et le composé organique chloré a lieu sous agitation, au sein d'un hydrocarbure liquide, à une température comprise entre 5° et 80 °C.

On peut ainsi obtenir, selon ces conditions, un support de chlorure de magnésium ayant un diamètre moyen en masse compris entre 10 et 100 microns et une distribution granulométrique telle que le rapport Dm/Dn des particules est inférieur ou égal à 3. Selon un mode préféré de l'invention, la distribution granulométrique du support est telle que plus de 90 % en poids des particules sont compris dans la fourchette Dm ± 10 %. Les catalyseurs, puis les prépolymères préparés à partir de ces supports présentent une distribution granulométrique sensiblement identique, de telle sorte qu'aucune opération de sélection granulométrique, telle que le tamisage, n'est nécessaire.

Les composés de métaux de transition peuvent être déposés sur le support selon des méthodes bien connues en elles-mêmes. Toutefois, afin d'obtenir un catalyseur ayant la meilleure activité, notamment pour la polymérisation de l'éthylène ou la copolymérisation de l'éthylène et des alpha-oléfines supérieures, puis un prépolymère conforme aux caractéristiques décrites selon l'invention, il est avantageux de déposer par précipitation sur le support un composé de métal de transition tel qu'un composé du titane dont la valence est inférieure à 4. Cette précipitation peut être réalisée selon les procédés connus, mais est avantageusement effectuée selon le procédé ci-après :

- la réaction de réduction d'un composé du titane à sa valence maximum, de formule $Ti(OR_7)_{4-n}X_n$, dans laquelle $R_7$ est un groupement alcoyle contenant de 2 à 6 atomes de carbone, X est un atome de chlore ou de brome et n est un nombre entier ou fractionnaire tel quel $1 \leq n \leq 4$, est effectuée au moyen d'un agent réducteur choisi parmi les composés organomagnésiens de formule $R_8MgR_9$, dans laquelle $R_8$ et $R_9$ sont des groupements alcoyle identiques ou différents contenant de 2 à 12 atomes de carbone, les composés organozinciques de formule $Zn(R_{10})_{2-y}X_y$, dans laquelle $R_{10}$ est un groupement alcoyle ayant de 2 à 12 atomes de carbone, X est le chlore ou le brome et y est un nombre entier ou fractionnaire tel que $0 \leq y \leq 1$, et les composés organoaluminiques de formule $Al(R_{11})_{3-x}X_x$, dans laquelle $R_{11}$ est un groupement alcoyle ayant de 2 à 12 atomes de carbone, X est le chlore ou le brome et x est un nombre entier ou fractionnaire tel que $0 \leq x \leq 2$ ;
- ladite réaction de réduction est réalisée en présence ou non d'un composé donneur d'électron choisi parmi les composés organiques comprenant au moins un atome d'oxygène, de soufre, d'azote et/ou de phosphore, tels que les amines, les amides, les phosphines, les sulfoxydes, les sulfones ou les éthers ; plus particulièrement; parmi les éthers, on peut préférer les éther aliphatiques de formule $R_{12}OR_{13}$, dans laquelle $R_{12}$ et $R_{13}$ sont des groupements alcoyle identiques ou différents ayant de 1 à 12 atomes de carbone ;
- les quantités relatives des divers composés (support, composé du titane, organomagnésien ou organozincique ou organoaluminique, donneur d'électron) sont, en rapports molaires, telles que :

  support/composé du titane compris entre 1 et 50, et, de préférence, compris entre 2,5 et 10 ;

composé organomagnésien ou organozincique ou organoaluminique/composé du titane inférieur à 3 et, de préférence, compris entre 0,5 et 1,5 ;

composé donneur d'électron/composé du titane compris entre 0 et 5 et, de préférence, compris entre 0,1 et 1,5.

La précipitation est effectuée à une température comprise entre - 30° et 100 °C, sous agitation, au sein d'un milieu d'hydrocarbure liquide.

La mise en oeuvre des réactifs peut être réalisée de diverses façons. On peut, par exemple, introduire progressivement l'agent réducteur (composé organomagnésien, organozincique ou organoaluminique) dans le milieu d'hydrocarbure liquide, contenant le support et le composé de titane. Il est également possible d'introduire progressivement et simultanément l'agent réducteur et le composé du titane dans le milieu d'hydrocarbure liquide contenant le support. Il a été constaté, toutefois, que les meilleurs résultats sont obtenus lorsque, dans une première étape, le support est imprégné à l'aide de l'agent réducteur, la réaction du support ainsi imprégné avec le composé de titane tétravalent étant réalisée dans une seconde étape, en présence éventuellement d'un composé donneur d'électron, tel qu'un éther aliphatique.

Dans d'autres cas, par exemple dans le cas de la polymérisation du propylène ou de la copolymérisation du propylène avec l'éthylène ou d'autres alpha-oléfines, on recherche des catalyseurs ayant non seulement une activité satisfaisante, mais également une très haute stéréospécificité, de manière à obtenir des polymères principalement isotactiques. Des résultats particulièrement bons sont alors obtenus en imprégnant le support de chlorure de magnésium avec du tétrachlorure de titane, cette imprégnation étant réalisée, de préférence, en présence d'un composé donneur d'électron. La préparation de ces catalyseurs à partir des supports est avantageusement réalisée en deux étapes, à savoir :

a) un traitement du support à l'aide d'un composé donneur d'électron, du type ester d'acide aromatique ou éther aromatique ;

b) une imprégnation du support ainsi traité à l'aide de tétrachlorure de titane.

Dans la première étape, la quantité de donneur d'électron à utiliser est comprise entre 0,06 et 0,2 mol de donneur d'électron par mole de composé de magnésium du support, et la température à utiliser est comprise entre environ 20° et 50 °C.

Dans la deuxième étape, le support est imprégné par du tétrachlorure de titane pur ou en milieu hydrocarboné ; les quantités de tétrachlorure de titane doivent être suffisantes pour que l'on fixe sur le support de 0,5 à 3 mol de titane par 100 mol de magnésium présents dans le support, la température d'imprégnation étant comprise entre environ 80 et 100 °C.

Les catalyseurs obtenus selon ces divers procédés se présentent avantageusement sous la forme de poudre constituée de particules ayant une granulométrie analogue à celle du support utilisé et, en particulier, une distribution granulométrique sensiblement identique.

Selon l'invention, le prépolymère est obtenu par mise en contact d'une ou plusieurs alpha-oléfines avec le catalyseur et le cocatalyseur constitué de composés organométalliques d'un métal des groupes I à III de la Classification Périodique des éléments, tels que les composés organoaluminiques. Le prépolymère contient, par gramme, entre $2 \times 10^{-3}$ et $10^{-1}$ mmol de métal de transition, et, de préférence entre $4 \times 10^{-3}$ et $3 \times 10^{-2}$ mmol de métal de transition.

Le prépolymère doit également se présenter sous la forme d'une poudre constituée de particules ayant un diamètre moyen en masse compris entre 80 et 300 microns, par exemple entre 100 et 300 microns et, de préférence, compris entre 100 et 240 microns.

Selon l'invention, le prépolymère doit, en outre, se présenter sous la forme d'une poudre constituée de particules ayant une distribution granulométrique telle que le rapport Dm/Dn est inférieur ou égal à 3, de préférence, compris entre 1,1 et 2,5. Selon les conditions de la polymérisation ou de la copolymérisation en lit fluidisé, on peut préférer utiliser une poudre de prépolymère ayant une distribution granulométrique très étroite, telle que le rapport Dm/Dn est compris entre 1,1 et 1,5, ou bien une poudre de prépolymère ayant une distribution granulométrique moins étroite, telle que le rapport Dm/Dn est compris entre 1,5 et 2,5. Selon un mode préféré de l'invention, on peut utiliser un prépolymère ayant une distribution granulométrique telle que le rapport Dm/Dn ≦ 1,3. De préférence, la poudre de prépolymère ne contient pratiquement pas de particules de diamètre supérieur à $2 \times$ Dm et inférieur à $0,2 \times$ Dm. La distribution granulométrique de la poudre de prépolymère peut également être telle que plus de 90 % en poids des particules d'un même lot sont compris dans la fourchette Dm ± 10 %.

Les prépolymères tels que décrits selon l'invention présentent l'avantage de ne pas contenir de composés minéraux à base d'oxydes réfractaires, tels que l'alumine, la silice, le silicate d'aluminium ou la magnésie.

Les prépolymères sont obtenus lors de la mise en contact d'une ou plusieurs alpha-oléfines avec le catalyseur et le cocatalyseur. Cette opération, appelée prépolymérisation, peut être effectuée soit en suspension dans un milieu liquide, tel que les hydrocarbures aliphatiques ou les alpha-oléfines liquides, soit en phase gazeuse.

Comme cocatalyseur, on peut utiliser les composés organoaluminiques tels que les composés de formule $Al(R_{14})_3$, dans laquelle $R_{14}$ est un radical alcoyle ayant de 2 à 12 atomes de carbone. On utilise, de préférence, des composés organoaluminiques peu volatils tels que, par exemple, le tri-n-octylaluminium.

Dans le cas particulier de la fabrication de polypropylène ou de copolymère du propylène, le cocatalyseur utilisé est, de préférence, un composé organoaluminique complexé par un composé donneur d'électron de type ester d'acide aromatique. Le rapport molaire entre le composé donneur d'électron et le composé organoaluminique est compris entre 0,1 et 0,5 et, de préférence, égal à 0,3 environ. Une quantité insuffisante de composé donneur d'électron diminue la stéréospécificité du système catalytique et une quantité au contraire trop importante de composé donneur d'électron affaiblit l'activité du système catalytique.

Dans cette opération de prépolymérisation, les quantités relatives molaires de composé organoaluminique par rapport au composé de métal de transition utilisé peuvent varier dans de très larges domaines ; par exemple, le rapport atomique Al/métal de transition peut varier entre 0,5 et 200.

La prépolymérisation peut avantageusement être effectuée en deux étapes.

La première étape de prépolymérisation, ou étape d'enrobage du catalyseur, se déroule dans des conditions telles que les vitesses de réaction sont relativement lentes. Cette étape a pour rôle, tout en respectant scrupuleusement la forme du catalyseur, de donner naissance à un catalyseur dit enrobé, présentant les meilleures propriétés en vue des étapes ultérieures de la polymérisation en lit fluidisé, ces propriétés étant notamment une résistance mécanique suffisante, une résistance à l'abrasion convenable, une densité apparente compatible avec les conditions de fluidisation et une activité contrôlée.

L'étape d'enrobage, si elle a lieu, est nécessairement effectuée par polymérisation ou copolymérisation d'alpha-oléfines en suspension dans un milieu liquide. Cette étape peut, en général, se poursuivre jusqu'à ce que le catalyseur enrobé obtenu contienne de 0,1 à 10 g de polymère ou de copolymère par millimole de métal de transition.

La deuxième étape de prépolymérisation peut se dérouler soit en suspension dans un milieu liquide, soit en phase gazeuse ; en général, cette étape peut être poursuivie tout en conservant au catalyseur une activité convenable, jusqu'à ce que le prépolymère contienne, par gramme, entre $2 \times 10^{-3}$ et $10^{-1}$ mmol de métal de transition, et, de préférence, entre $4 \times 10^{-3}$ et $3 \times 10^{-2}$ mmol de métal de transition, présent dans le catalyseur.

Divers moyens, connus en eux-mêmes, peuvent être mis en oeuvre afin d'obtenir les poudres de prépolymère ayant, en particulier, une distribution granulométrique telle que définie selon l'invention. On peut notamment utiliser des procédés mettant en oeuvre une sélection granulométrique, tels que le tamisage, l'élutriation au moyen d'un courant gazeux, ou la lévigation au moyen d'un courant liquide. Ces opérations de sélection granulométrique peuvent être réalisées soit sur le prépolymère, soit sur le catalyseur, soit le cas échéant sur le support dont il est issu. Elles doivent être réalisées dans des conditions telles que les systèmes catalytiques présents dans ces poudres de prépolymère ne perdent pas leur activité au cours de ces opérations. En particulier, les gaz ou liquides mis en oeuvre doivent être parfaitement inertes vis-à-vis de ces systèmes catalytiques.

Il est, toutefois, préférable, pour une plus grande simplification et une meilleure efficacité du procédé dans son ensemble, d'utiliser, pour la prépolymérisation, des catalyseurs solides présentant une distribution granulométrique telle qu'ils produisent directement la poudre de prépolymère désirée. Il est, en fait, important de veiller à ce que, pendant les opérations de prépolymérisation, le développement des particules de prépolymère s'effectue de façon régulière de telle sorte que le prépolymère obtenu présente une distribution granulométrique convenable, sensiblement identique à celle du catalyseur dont il est issu et qu'il est ainsi directement prêt à l'emploi.

Le prépolymère tel que décrit selon l'invention est, ensuite, mis en contact avec une ou plusieurs alpha-oléfines dans l'étape de polymérisation ou de copolymérisation en phase gazeuse, au moyen d'un lit fluidisé. Cette opération est avantageusement réalisée en continu par des techniques connues en elles-mêmes, selon lesquelles le mélange gazeux contenant les alpha-oléfines à polymériser circulent suivant un courant gazeux ascendant à travers un lit fluidisé, constitué de particules de polymère ou de copolymère en cours de formation. Les alpha-oléfines à polymériser sont introduites dans le réacteur à lit fluidisé à une température telle que le milieu réactionnel soit à une température d'au moins 60 °C et avantageusement d'au moins 80 °C.

La vitesse de fluidisation dans le réacteur à lit fluidisé peut être suffisamment élevée pour assurer l'homogénéisation du lit fluidisé et pour éliminer efficacement la chaleur dégagée par la polymérisation, sans avoir recours à aucun autre moyen d'homogénéisation, notamment mécanique. La vitesse de fluidisation est, de préférence, égale à 5 à 10 fois la vitesse minimum de fluidisation, c'est-à-dire généralement comprise entre environ 40 et 80 cm/s. En traversant le lit fluidisé, une partie seulement des alpha-oléfines se polymérise au contact des particules de polymère ou de copolymère en cours de croissance. La fraction des alpha-oléfines qui n'a pas réagi, sort du lit fluidisé et passe à travers un système de refroidissement, destiné à éliminer la chaleur produite au cours de la réaction, avant d'être recyclée dans le réacteur à lit fluidisé, au moyen d'un compresseur.

La pression moyenne dans le réacteur peut être voisine de la pression atmosphérique, mais est, de préférence, plus élevée afin d'augmenter la vitesse de polymérisation. Elle peut atteindre, par exemple, 3 MPa.

Selon l'invention, la polymérisation ou la copolymérisation de l'éthylène est avantageusement arrêtée, lorsque le polymère ou le copolymère contient, par gramme, moins de $5 \times 10^{-4}$ mmol de titane et, de préférence, moins de $2 \times 10^{-4}$ mmol de titane.

Le polymère ou le copolymère ainsi obtenu se présente sous la forme d'une poudre constituée de particules ayant un diamètre moyen en masse, Dm, compris entre 600 et 1 200 microns, et ayant une distribution granulométrique telle que le rapport Dm/Dn est inférieur ou égal à 3,5 et, de préférence, compris entre 1,2 et 3. La largeur de la distribution granulométrique de cette poudre qui constitue le lit fluidisé, dépend non seulement de celle du prépolymère utilisé, mais aussi du temps de séjour moyen du polymère ou du copolymère dans le réacteur à lit fluidisé, ainsi que de la vitesse avec laquelle le système catalytique perd son activité au cours de la réaction de polymérisation ou de copolymérisation. Il est, en particulier, avantageux dans un tel procédé d'utiliser un système catalytique qui perd relativement rapidement son activité au cours de la réaction, afin, notamment, d'obtenir une poudre ayant la distribution granulométrique la plus étroite possible.

En vue d'obtenir le réglage des masses moléculaires des polymères ou copolymères, il est possible. lors de la préparation du prépolymère et dans l'étape de polymérisation ou de copolymérisation en lit fluidisé, de mélanger les alpha-oléfines à polymériser ou à copolymériser avec un agent limiteur de chaîne, tel que l'hydrogène, dans un rapport molaire hydrogène/alpha-oléfines compris par exemple entre 10 et 80 %.

Dans certains cas, notamment lorsque la quantité de prépolymère mis en oeuvre en polymérisation est faible, il peut être commode de mélanger ce prépolymère avec du polymère ou du copolymère déjà formé, provenant d'une opération antérieure, afin de pouvoir commencer la polymérisation en lit fluidisé avec une quantité de matières solides correspondant à une hauteur de lit fluidisé suffisante.

Selon le procédé de l'invention, il est possible de fabriquer, dans des conditions industrielles satisfaisantes et très simplifiées, un grand nombre de polymères et de copolymères d'alpha-oléfines de qualité très reproductible, et par exemple, les polyéthylènes haute densité (densité supérieure à 0,940), parmi lesquels on distingue les homopolymères de l'éthylène et les copolymères de l'éthylène et d'alpha-oléfines ayant de 3 à 8 atomes de carbone, les polyéthylènes basse densité linéaires (densité inférieure à 0,940), constitués de copolymères de l'éthylène et d'une ou plusieurs alpha-oléfines ayant de 3 à 8 atomes de carbone, avec une teneur de plus de 90 % de motifs dérivés de l'éthylène, les terpolymères élastomères d'éthylène, de propylène et de diènes, les copolymères élastomères d'éthylène et de propylène, ayant une teneur pondérale en motifs dérivés de l'éthylène comprise entre environ 30 et 70 %, les polypropylènes isotactiques et les copolymères de propylène et de l'éthylène ou d'autres alpha-oléfines, ayant une teneur pondérale en motifs dérivés du propylène supérieure à 90 %, les copolymères de propylène et de butène-1 ayant une teneur pondérale en motifs dérivés du butène-1 comprise entre 10 et 40 %. Les poudres d'homopolymères de l'éthylène et de copolymères de l'éthylène et d'alpha-oléfines ayant plus de 50 % de motifs dérivés de l'éthylène, obtenues selon la présente invention, contiennent moins de 350 ppm, de préférence moins de 150 ppm de résidus inorganiques, notamment exempts de composés minéraux à base d'oxydes réfractaires. Les poudres de polyoléfines présentent, généralement, une masse volumique élevée, supérieure à 0,40 g/cm³, de préférence supérieure à 0,45 g/cm³.

Méthode de détermination des diamètres moyens en masse (Dm) et en nombre (Dn) de particules.

Selon l'invention, les diamètres moyens en masse (Dm) et en nombre (Dn) des particules de support, de catalyseur, de prépolymère ou de polymère sont mesurés à partir d'observations microscopiques, au moyen de l'analyseur d'images OPTOMAX (Micro-Measurements Ltd- Grande-Bretagne). Le principe de la mesure consiste à obtenir, à partir de l'étude expérimentale par microscopie optique d'une population de particules, une table d'effectifs où est donné le nombre (ni) de particules appartenant à chaque classe (i) de diamètres, chaque classe (i) étant caractérisée par un diamètre intermédiaire (di) compris entre les limites de ladite classe. Suivant la norme française homologuée Nf x 11-630 de juin 1981, Dm et Dn sont fournis par les formules suivantes :

diamètre moyen en masse :

$$Dm = \frac{\Sigma ni(di)^3 di}{\Sigma ni(di)^3}$$

diamètre moyen en nombre :

$$Dn = \frac{\Sigma ni \cdot di}{\Sigma ni}$$

Le rapport Dm/Dn caractérise la distribution granulométrique : il est parfois appelé «largeur de distribution granulométrique». La mesure par l'analyseur d'images OPTOMAX est réalisée au moyen d'un microscope inversé qui permet l'examen des suspensions de particules de support, de catalyseur, de prépolymère ou de polymère avec un grossissement compris entre 16 et 200 fois. Une caméra de télévision reprend les images données par le microscope inversé et les transmet à un ordinateur qui analyse les images reçues ligne par ligne et point par point sur chaque ligne, en vue de déterminer les dimensions ou diamètres des particules, puis de les classer.

Les exemples non limitatifs suivants illustrent l'invention.

Exemple 1

Préparation du support

Dans un réacteur de 5 litres en acier inoxydable, muni d'un système d'agitation tournant à 750 tours par minute et contenant 800 ml de n-hexane, on introduit à température ambiante (20 °C) et sous couverture d'azote, 1 725 ml d'une solution de butyloctylmagnésium dans le n-hexane contenant 1 500 mmol de magnésium et 153 ml (750 mmol) d'éther diisoamylique. Le réacteur est alors chauffé à 50 °C et on y introduit progressivement en 3 heures, 322 ml de chlorure de tertiobutyle (soit 2 925 mmol).

A la fin de cette addition, on maintient la suspension à 50 °C pendant 3 heures et on lave le précipité obtenu avec du n-hexane.

Le produit solide (A) obtenu a la composition suivant par mole de magnésium : 1,97 mol de chlore, 0,03 mol de Mg-C et 0,02 mol d'éther diisoamylique. A l'examen microscopique, le produit solide (A) se présente sous forme d'une poudre constituée de particules sphéroïdiques (le rapport moyen entre grand et petit axe, D/d, des particules est égal à 1,2), ayant une distribution granulométrique étroite, définie par le rapport Dm/Dn égal à 1,1, avec Dm = 52 microns ; on trouve, en outre, que plus de 90 % en poids des particules ont un diamètre moyen compris entre 47 et 57 microns ; la densité du produit est égale à 1,9 et sa surface spécifique à 38 m²/g (BET) ; la surface des particules est parfaitement lisse.

Exemple 2

On utilise comme support de catalyseur le produit (A) préparé à l'exemple 1 ci-dessus.

Préparation du catalyseur

Dans 3 000 ml de suspension dans le n-hexane de produit (A), contenant 1 450 mmol de $MgCl_2$, on ajoute sous agitation 82 ml d'éther diisoamylique et 400 ml d'une solution 1,2 molaire de chlorure de diéthylaluminium dans le n-hexane (soit 480 mmol). Le réacteur est porté à 50 °C et on y introduit progressivement en 2 heures, 650 ml d'une solution 0,6 molaire de dichlorure de di-n-propoxytitane dans le n-hexane (soit 390 mmol). A la fin de cette introduction, on porte la température à 80 °C et on maintient celle-ci pendant 2 heures. Le catalyseur obtenu est ensuite lavé cinq fois avec du n-hexane pour donner le solide catalytique prêt à l'emploi (B). L'analyse du catalyseur (B) obtenu montre qu'il contient par mole de titane total : 0,94 mol de titane trivalent, 0,06 mol de titane tétravalent, 3,85 mol de magnésium, 9,97 mol de chlore, 0,20 mol d'aluminium et 0,11 mol d'éther diisoamylique. Le catalyseur ainsi défini est une poudre de couleur brune composée de particules de forme sphéroïdale, ayant une distribution granulométrique étroite telle que plus de 90 % des particules ont un diamètre moyen compris entre 50 et 60 microns, avec Dm = 55 microns ; on trouve, en outre, que le rapport Dm/Dn des particules de catalyseur est égal à 1,2 ; la surface de ces particules est parfaitement lisse.

Prépolymérisation (première étape)

Dans un réacteur de 5 litres en acier inoxydable, muni d'un système d'agitation tournant à 750 tours par minute et contenant 2 litres de n-hexane chauffé à 50 °C, on introduit sous couverture d'azote 100 mmol de tri-n-octylaluminium (TnOA) et une suspension du catalyseur (B) dans le n-hexane contenant 500 mmol de titane (soit 295 g de (B)). Le réacteur est chauffé à 60 °C et l'éthylène y est introduit à un débit constant et égal à 167 g/h, pendant 3 heures. A la fin de la réaction, on transvase le tout dans un évaporateur rotatif sous vide ; on obtient ainsi 820 g de poudre sèche (C) d'un prépolymère de couleur brun clair, composée de particules d'un diamètre moyen en masse égal à 66 microns et de distribution granulométrique étroite, telle que le rapport Dm/Dn est égal à 1,2. La poudre (C) est conservée sous azote.

Prépolymérisation (deuxième étape)

Dans un réacteur à lit fluidisé de 15 cm de diamètre fonctionnant avec une vitesse de gaz de 10 cm/s, sous des pressions partielles de 0,8 MPa d'azote, 0,1 MPa d'hydrogène et 0,1 MPa d'éthylène, on introduit toutes les 6 minutes 11 g de la poudre (C) et en continu 25 g/h de TnOA pur, dans la moitié inférieure du lit maintenu à 70 °C. Au soutirage séquencé, on recueille 4 kg/h d'une poudre légèrement teintée en beige qui présente, pour un temps de séjour de 0,5 heure dans le réacteur, une teneur en titane de 800 ppm (soit $1,67 \times 10^{-2}$ mmol de titane par gramme de prépolymère), un diamètre moyen en masse de 260 microns, une distribution granulométrique telle que le rapport Dm/Dn est égal à 1,3 et une masse volumique apparente de 0,41 g/cm$^3$ ; le prépolymère (D) ainsi obtenu est également conservé sous azote.

Polymérisation de l'éthylène

Dans un réacteur à lit fluidisé de 46 cm de diamètre fonctionnant avec un gaz ascensionnel animé d'une vitesse de 45 cm/s et sous des pressions partielles de 1,2 MPa d'hydrogène et 0,8 MPa d'éthylène, on introduit de manière séquencée 0,5 kg/h de prépolymère (D) dans le lit maintenu à 85 °C. Au soutirage séquencé, on recueille 25 kg/h d'une poudre blanche qui présente, pour un temps de séjour de 6 heures dans le réacteur, une teneur en titane de 16 ppm (soit $3,3 \times 10^{-4}$ mmol de titane par gramme de polymère), un diamètre moyen en masse de 940 microns, une distribution granulométrique étroite, telle que le rapport Dm/Dn est égal à 1,5 et une masse volumique apparente de 0,47 g/cm$^3$ ; par ailleurs, l'indice de fluidité sous 2,16 kg à 190 °C est de 6 g/10 minutes, la largeur de distribution des masses moléculaires, Mw/Mn, mesurée par GPC, est de 4 et la teneur en résidus inorganiques de 218 ppm.

Exemple 3

On utilise comme support (A) une poudre à base de chlorure de magnésium, constituée de particules sphériques ayant une distribution granulométrique étroite, telle que plus de 90 % en poids des particules ont un diamètre moyen compris entre 29 et 35 microns, avec Dm = 32 microns ; en outre, on constate que le rapport Dm/Dn est égal à 1,1 ; cette poudre présente une densité égale à 1,85 et une surface spécifique égale à 41 m$^2$/g (BET).

Préparation du catalyseur

Elle est identique à celle de l'exemple 2. L'analyse du catalyseur (B) obtenu donne par mole de titane total : 0,96 mol de titane trivalent, 0,04 mol de titane tétravalent, 3,60 mol de magnésium, 9,40 mol de chlore, 0,13 mol d'aluminium et 0,07 mol d'éther diisoamylique. Le catalyseur (B) est une poudre de couleur brune composée de particules sphériques ayant une distribution granulométrique étroite telle que plus de 90 % en poids des particules ont un diamètre moyen compris entre 30 et 36 microns, aved Dm = 33 microns ; on constate, en outre, que le rapport Dm/Dn est égal à 1,2 ; la surface des particules de catalyseur est légèrement bosselée, du type «framboise».

Prépolymérisation (première étape)

Elle est identique à celle de l'exemple 2. On obtient 807 g d'une poudre sèche (C) d'un prépolymère, ayant un diamètre moyen en masse égal à 40 microns et une distribution granulométrique étroite, telle que le rapport Dm/Dn est égal à 1,2.

Pré-copolymérisation (deuxième étape)

Dans un réacteur à lit fluidisé de 15 cm de diamètre, fonctionnant avec un gaz ascensionnel animé d'une vitesse de 10 cm/s et sous des pressions partielles de 1 MPa d'azote, 0,04 MPa d'hydrogène, 0,05 MPa de butène-1 et 0,13 MPa d'ethylène, on introduit toutes les 6 minutes, 6,5 g de la poudre (C) et en continu 26,4 g/h de TnOA dans le lit maintenu à 70 °C. On soutire 4 kg/h de poudre (D) d'un précopolymère de l'éthylène qui contient, par gramme, $10^{-2}$ mmol de titane, pour un temps de séjour de 0,5 heure dans le réacteur. Cette poudre présente un diamètre moyen en masse de 190 microns, une distribution granulométrique telle que le rapport Dm/Dn est égal à 1,3 et une masse volumique apparente de 0,36 g/cm$^3$.

Copolymérisation de l'éthylène et du butène-1

Dans un réacteur à lit fluidisé de 46 cm de diamètre fonctionnant avec un gaz ascensionnel animé d'une vitesse de 45 cm/s et sous des pressions partielles de 0,7 MPa d'azote, 0,2 MPa d'hydrogène, 0,26 MPa de butène-1 et 0,84 MPa d'éthylène, on introduit 0,44 kg/h du pré-copolymère (D) dans le lit maintenu à 80 °C. Au soutirage, on recueille 21 kg/h d'une poudre de copolymère de l'éthylène qui contient, par gramme de copolymère, $2,1 \times 10^{-4}$ mmol de titane, pour un temps de séjour de 6 heures dans le réacteur. Cette poudre de copolymère présente un diamètre moyen en masse de 720 microns et une distribution granulométrique telle que le rapport Dm/Dn des particules est égal à 1,6 ; par ailleurs, l'indice de fluidité du copolymère sous 2,16 kg à 190 °C est égal à 1 g/10 minutes ; sa densité à 20 °C est égale à 0,917 et sa résistance à la flexion à 21 MPa ; sa masse volumique apparente est égale à 0,40 g/cm$^3$ et sa teneur en résidus inorganiques à 136 ppm.

Exemple 4

On utilise comme support (A) une poudre à base de chlorure de magnésium, constituée de particules sphériques ayant une distribution granulométrique, telle que le rapport Dm/Dn est égal à 2,3 avec Dm = 23 microns ; cette poudre présente une densité égale à 2,1.

Préparation du catalyseur

Elle est identique à celle de l'exemple 2. L'analyse du catalyseur (B) obtenu donne par mole de titane total : 0,94 mol de titane trivalent, 0,06 mol de titane tétravalent, 3,80 mol de magnésium, 9,84 mol de chlore, 0,16 mol d'aluminium et 0,08 mol d'éther diisoamylique. Le catalyseur (B) est poudre brune composée de particules sphéroïdiques, ayant une distribution granulométrique telle que le rapport Dm/Dn est égal à 2,4, avec Dm = 23 microns.

Prépolymérisation (première étape)

Elle est identique à celle de l'exemple 2. On obtient 817 g de poudre sèche (C) d'un prépolymère ayant un diamètre moyen en masse égal à 28 microns et une distribution granulométrique telle que le rapport Dm/Dn est égal à 2,4.

Prépolymérisation (deuxième étape)

Dans un réacteur à lit fluidisé de 15 cm de diamètre fonctionnant avec un gaz ascensionnel animé d'une vitesse de 10 cm/s et sous des pressions partielles de 1,8 MPa d'azote, 0,1 MPa d'hydrogène, et 0,1 MPa d'éthylène, on introduit toutes les 5 minutes 2,2 g de poudre (C) et en continu, 28,4 g/h de TnOA dans la moitié inférieure du lit maintenu à 70 °C. La poudre (D) de prépolymère, recueillie au soutirage à raison de 4 kg/h, contient, par gramme, $4 \times 10^{-3}$ milliatome-gramme de titane, pour un temps de séjour de 0,5 heure dans le réacteur. Cette poudre présente un diamètre moyen en masse de 175 microns, une distribution granulométrique telle que le rapport Dm/Dn est égal à 2,5, et une masse volumique apparente de 0,42 g/cm$^3$.

Polymérisation de l'éthylène.

Elle est identique à celle de l'exemple 2. On obtient ainsi un polyéthylène, contenant, par gramme, $8 \times 10^{-5}$ mmol de titane ; la poudre de polyéthylène présente un diamètre moyen en masse de 640 microns, une distribution granulométrique telle que le rapport Dm/Dn des particules est égal à 2,8 et une masse volumique apparente de 0,51 g/cm$^3$ ; par ailleurs, l'indice de fluidité du polymère sous 2,16 kg à 190 °C est égale à 8 g/10 minutes et la teneur en résidus inorganiques à 54 ppm.

Exemple 5

On utilise comme support (A) une poudre à base de chlorure de magnésium, constituée de particules sphéroïdiques ayant une distribution granulométrique telle que le rapport Dm/Dn est égal à 1,3, avec Dm = 23 microns.

Préparation du catalyseur

Dans 3 000 ml de suspension dans le n-hexane de produit (A), contenant 1 450 mmol de MgCl$_2$, on ajoute sous agitation 82 ml d'éther diisoamylique et 330 ml d'une solution 1,2 molaire de chlorure de diéthylaluminium dans le n-hexane (soit 396 mmol). Le réacteur est porté à 50 °C et on y introduit progressivement en 2 heures, 650 ml d'une solution 0,6 molaire de dichlorure de di-n-propoxytitane dans le n-hexane (soit 390 mmol). A la fin de cette introduction, on porte la température à 80 °C et on maintient celle-ci pendant 2 heures. Le catalyseur obtenu est ensuite lavé cinq fois avec du n-hexane pour donner le solide catalytyque prêt à l'emploi (B). L'analyse du catalyseur (B) obtenu montre qu'il contient par mole de titane total : 0,94 mol de titane trivalent, 0,06 mol de titane tétravalent, 3,80 mol de magnésium, 9,90 mol de chlore, 0,20 mol d'aluminium et 0,10 mol d'éther diisoamylique. Le catalyseur ainsi défini est une poudre de couleur brune composée de particules de forme sphéroïdale, ayant une distribution granulométrique telle que le rapport Dm/Dn est égal a 1,3, avec Dm = 23 microns ; la surface de ces particules est lisse.

Prépolymérisation (première étape)

Dans un réacteur de 5 litres en acier inoxydable, muni d'un système d'agitation tournant à 750 tours par minute et contenant 2 litres de n-hexane chauffé à 50 °C, on introduit sous couverture d'azote 80 mmol de tri-n-octylaluminium (TnOA) et une suspension du catalyseur (B) dans l'hexane contenant 80 mmol de titane (soit 46 g de (B)). Le réacteur est chauffé à 60 °C et l'éthylène y est introduit à un débit constant et égal à 167 g/h, pendant 3 heures. A la fin de la réaction on transvase le tout dans un évaporateur rotatif sous vide ; on obtient ainsi 570 g de poudre sèche (C) d'un prépolymère de couleur brun clair, composée de particules d'un diamètre moyen en masse égal à 50 microns et de distribution granulométrique telle que le rapport Dm/Dn est égal à 1,4. La poudre (C) est conservée sous azote.

Prépolymérisation (deuxième étape)

Dans un réacteur à lit fluidisé de 15 cm de diamètre fonctionnant avec une vitesse de gaz de 10 cm/s, sous des pressions partielles de 0,8 MPa d'azote, 0,1 MPa d'hydrogène et 0,1 MPa d'éthylène, on introduit toutes les 6 minutes 12 g de la poudre (C) dans la moitié inférieure du lit maintenu à 70 °C. Au soutirage séquencé, on recueille 4 kg/h d'une poudre (D) légèrement teintée en beige qui contient, par gramme, $4 \times 10^{-3}$ mmol de titane, pour un temps de séjour de 2 heures dans le réacteur. Cette poudre présente une distribution granulométrique telle que le rapport Dm/Dn des particules est égal à 1,6, avec Dm = 172 microns, et une masse volumique apparente de 0,41 g/cm$^3$ ; le prépolymère (D) ainsi obtenu est également conservé sous azote.

Polymérisation de l'éthylène

Dans un réacteur à lit fluidisé de 46 cm de diamètre fonctionnant avec un gaz ascensionnel animé d'une vitesse de 45 cm/s et sous des pressions partielles de 1,2 MPa d'hydrogène et 0,8 MPa d'éthylène, on introduit de manière séquencée 0,5 kg/h de prépolymère (D) et en continu 29,8 g/h de TnOA dans la moitié inférieure du lit maintenu à 85 °C. Au soutirage séquencé, on recueille 25 kg/h d'une poudre blanche qui contient, par gramme, $8 \times 10^{-5}$ mmol de titane, pour un temps de séjour de 6 heures dans le réacteur. Cette poudre présente une distribution granulométrique telle que le rapport Dm/Dn des particules est égal à 1,8, avec Dm = 650 microns et une masse volumique apparente de 0,52 g/cm$^3$ ; par ailleurs, l'indice de fluidité sous 2,16 kg à 190 °C est de 6 g/10 minutes, la largeur de distribution des masses moléculaires, Mw/Mn, est de 4, la teneur en résidus inorganiques de 54 ppm.

Exemple 6

On utilise le support (A) préparé à l'exemple 5.

Préparation du catalyseur

Dans 3 000 ml de suspension du support (A) contenant 1 450 mmol de MgCl$_2$, on ajoute sous agitation 8,2 ml d'éther diisoamylique et 270 ml d'une solution de 1,2 molaire de chlorure de diéthylaluminium dans le n-hexane. Le milieu réactionnel est chauffé à 30 °C et on y introduit progressivement en 2 heures, 650 ml d'une solution 0,6 molaire de tétrachlorure de titane dans le n-hexane. A la fin de cette introduction, le milieu est chauffé à 80 °C et maintenu pendant 2 heures sous agitation à cette température. Le catalyseur obtenu est ensuite lavé cinq fois avec du n-hexane pour donner le solide catalytique (B) prêt à l'emploi.

L'analyse du catalyseur (B) montre qu'il contient par mole de titane total : 0,97 mol de titane trivalent, 0,03 mol de titane tétravalent, 3,7 mol de magnésium, 11,2 mol de chlore, 0,33 mol d'aluminium et 0,01 mol d'éther diisoamylique.

Le catalyseur ainsi défini est une poudre de couleur brune composée de particules sphéroïdiques, ayant une distribution granulométrique telle que le rapport Dm/Dn est égal à 1,4, avec Dm = 23 microns.

Prépolymérisation en suspension

Dans un réacteur de 5 litres en acier inoxydable, on introduit 3 000 ml de n-hexane qu'on chauffe à 70 °C, sous agitation (750 tours par minute), 19 ml d'une solution 1,14 molaire de tri-n-octylaluminium dans le n-hexane, 16,7 ml d'une suspension du catalyseur (B) dans le n-hexane, contenant 0,13 mol de titane par litre et un volume de 1 500 ml d'hydrogène, mesuré dans les conditions normales. On introduit alors de l'éthylène suivant un débit de 180 g/h pendant 3 heures, avec addition d'un volume de 1 500 ml d'hydrogène, mesuré dans les conditions normales, après 1 h 30 de réaction. Le prépolymère obtenu est séché à 70 °C sous azote, la quantité recueillie étant de 530 g. La poudre de prépolymère contient, par gramme, $4,1 \times 10^{-3}$ mmol de titane. Elle présente une distribution granulométrique telle que le rapport Dm/Dn des particules est égal à 1,8, avec Dm = 180 microns. Sa masse volumique apparente est égale à 0,36 g/cm$^3$.

Polymérisation de l'éthylène

Elle est identique à celle de l'exemple 2, excepté le fait d'utiliser le prépolymère préparé dans l'exemple 6 et que les pressions d'hydrogène et d'éthylène sont respectivement égales à 0,6 MPa et 1,4 MPa. Le prépolymère est introduit dans le lit fluidisé suivant un débit de 0,470 kg/h et la production est de 30 kg/h de polyéthylène. Le polymère obtenu a un diamètre moyen en masse de 700 microns, une masse volumique apparente de 0,44 g/cm$^3$, un indice de fluidité sous 5 kg à 190 °C de 1 g/10 minutes et une largeur de distributon des masses moléculaires, Mw/Mn, égale à 10. Le polymère contient, par gramme, $6 \times 10^{-6}$ milliatomegramme de titane et présente une teneur en résidus inorganiques de 40 ppm.

Exemple 7

Préparation du support

Dans un réacteur en verre, ayant une capacité de 1 litre, muni d'un système d'agitation tournant à 500 tours par minute, on introduit à température ambiante et sous azote 550 ml d'une solution de dibutyle magnésium dans le n-hexane contenant 500 mmol de magnésium et 51 ml d'éther diisoamylique (250 mmol).

Le réacteur est alors chauffé à 50 °C et on y verse, goutte à goutte en 2 heures, 115 ml de chlorure de tertiobutyle (1 050 mmol). A la fin de cette addition, on maintient la suspension à 50 °C pendant 2 heures et on lave le précipité obtenu à cette même température avec du n-hexane.

Le support ainsi formé contient par mole de magnésium : 2.0 mol de chlore et 0,011 mol d'éther diisoamylique.

A l'examen microscopique, le support se présente sous forme de particules sphéroïdiques (le rapport D/d entre le grand et le petit axe des particules est en moyenne égal à 1,2) ayant une distribution granulométrique telle que Dm/Dn = 1,2 avec Dm = 60 microns ; on trouve que plus de 90 % en poids des particules ont un diamètre moyen compris entre 54 et 66 microns ; ces particules présentent une surface lisse, une surface spécifique égale à 42 m$^2$/g (BET) et une densité égale à 1,3.

Préparation du catalyseur

Dans un réacteur en verre, ayant une capacité de 1 litre et muni d'un système d'agitation tournant à 250 tours par minute, on introduit sous azote 500 ml d'une suspension dans le n-hexane du support préparé ci-dessus, cette suspension contenant 0,2 mol de magnésium. Après décantation, on soutire la phase hydrocarbonée surnageante. Le réacteur est alors chauffé à 50 °C et on y introduit 2 ml de benzoate d'éthyle (14 mmol). On maintient la suspension sous agitation pendant 2 heures, puis on introduit 2 mol de tétrachlorure de titane pur (220 ml). On élève la température à 80 °C et on maintient cette température pendant 2 heures. Le solide obtenu est ensuite lavé avec du n-hexane à 50 °C pour donner le catalyseur prêt à l'emploi, sous forme d'une suspension dans le n-hexane.

L'analyse du catalyseur montre qu'il contient, par mole de magnésium : 2,05 mol de chlore, 0,014 mol de titane, 0,016 mol de benzoate d'éthyle et qu'il ne contient aucune trace d'éther diisoamylique.

Le catalyseur ainsi défini est une poudre de couleur jaune grisâtre, constituée de particules de forme sphéroïdale, ayant une distribution granulométrique telle que Dm/Dn = 1,2 avec Dm = 60 microns ; on trouve, en outre, que plus de 90 % en poids des particules ont un diamètre moyen compris entre Dm ± 10 % ; ces particules présentent une surface aussi lisse que celle du support initial.

Préparation d'un prépolymère en suspension

Dans un réacteur en acier inoxydable, ayant une capacité de 5 litres et muni d'un système d'agitation tournant à 750 tours par minute, on introduit 25 mmol de triisobutylaluminium, 9,25 mmol de paratoluate de méthyle et une quantité du catalyseur préparé à l'exemple 7 correspondant à 2,5 mmol de titane. On complète le volume de la suspension à 2 litres avec du n-hexane. A température ambiante (20 °C), on introduit dans le réacteur un volume de 30 ml d'hydrogène mesuré dans les conditions normales, puis le propylène suivant un débit de 200 g/h pendant 2 heures et demie. Au bout de ce temps, on maintient la suspension de prépolymère sous agitation pendant encore une demi-heure. On dégaze le réacteur et, toujours sous couverture d'azote, on lave 3 fois la poudre de prépolymère avec du n-hexane. On transvase alors la suspension de prépolymère dans le n-hexane, dans un évaporateur rotatif sous vide. On obtient 510 g d'une poudre sèche de prépolymère, constituée de particules sphéroïdiques, de distribution granulométrique telle que le rapport Dm/Dn est égal à 1,4, de diamètre moyen en masse égal à 175 microns, de surface lisse et contenant, par gramme de prépolymère, $5 \times 10^{-3}$ mmol de titane. Cette poudre est conservée sous azote.

Polymérisation du propylène

Dans un reacteur à lit fluidisé, de 46 cm de diamètre, fonctionnant avec un gaz ascensionnel animé d'une vitesse de 45 cm/s et sous des pressions partielles de 0,1 MPa d'hydrogène et 1,5 MPa de propylène, on introduit de manière séquencée 0,8 kg/h de la poudre sèche de prépolymère préparé à l'exemple 7. On y introduit en continu une solution dans le n-hexane d'un mélange de TnOA et de paratoluate de méthyle en rapport molaire 1/0,25, suivant un débit correspondant à 450 mmol de TnOA par heure. La température du lit fluidisé est maintenue à 60 °C pendant toute la polymérisation. Par soutirage séquenceé, on obtient environ 25 kg/h d'une poudre sèche de polypropylène directement utilisable qui contient, par gramme, $1,6 \times 10^{-4}$ mmol de titane pour un temps de séjour de 6 heures dans le réacteur. Cette poudre de polypropylène présente un diamètre moyen en masse égal à 400 microns, une masse volumique apparente de 0,45 g/cm$^3$, une teneur en polymère insoluble dans le n-heptane bouillant de 90 % en poids et un indice de fluidité (IF$_5$) sous 5 kg à 190 °C de 2 g/10 minutes.

Exemple 8

Copolymérisation du propylène et de l'éthylène

On opère exactement comme à l'exemple 7, et en particulier avec le même prépolymère, excepté le fait que le réacteur à lit fluidisé fonctionne sous des pressions partielles de 1,4 MPa de propylène et 0,1 MPa d'éthylène au lieu de 1,5 MPa de propylène seul, et que l'on introduit dans le réacteur à lit fluidisé 0,6 kg/h de prépolymère au lieu de 0,8 kg/h.

Par soutirage séquencé, on obtient environ 20 kg/h d'une poudre sèche d'un copolymère du propylène et de l'éthylène directement utilisable qui contient, par gramme, $1,5 \times 10^{-4}$ mmol de titane. Cette poudre de copolymère présente un diamètre moyen en masse de 410 microns, une masse volumique apparente (MVA) de 0,44 g/cm$^3$, une teneur en motifs dérivés de l'éthylène de 5 % en poids, une teneur en copolymère insoluble dans le n-heptane bouillant de 85 % en poids et un indice de fluidité (IF$_5$) sous 5 kg à 190 °C de 3 g/10 minutes.

## Revendications

1. Procédé de fabrication de polyoléfines comportant, dans une première étape, la mise en contact d'une ou plusieurs alpha-oléfines avec un système catalytique du type Ziegler comprenant, d'une part, un catalyseur solide se présentant sous forme de particules et contenant essentiellement des atomes d'halogène, de magnésium et d'un métal de transition appartenant aux groupes IV, V et VI de la Classification Périodique des éléments, et, d'autre part, un cocatalyseur constitué de composés organométalliques d'un métal des groupes I à III de cette Classification, pour obtenir un prépolymère sous forme de particules, puis, dans une seconde étape, la mise en contact dudit prépolymère avec une ou plusieurs alpha-oléfines pour produire en continu un polymère ou un copolymère d'alpha-oléfines directement sous forme d'une poudre constituée de particules, dans des conditions de polymérisation ou de copolymérisation en phase gazeuse au moyen d'un réacteur à lit fluidisé dans lequel les particules de prépolymère et de polymère ou de copolymère d'alpha-oléfines sont maintenues à l'état fluidisé au moyen d'un courant gazeux ascendant comprenant le ou les alpha-oléfines à polymériser, procédé caractérisé en ce que :

  a) le prépolymère contient, par gramme, entre $2 \times 10^{-3}$ et $10^{-1}$ mmol de métal de transition et se présente sous la forme de particules ayant un diamètre moyen en masse compris entre 80 et 300 microns et une distribution granulométrique telle que le rapport du diamètre moyen en masse, Dm, au diamètre moyen en nombre, Dn, est inférieur ou égal à 3,

  b) le polymère ou le copolymère d'alpha-oléfines présent dans le réacteur à lit fluidisé contient, par gramme, moins de $5 \times 10^{-4}$ mmol de métal de transition et se présente sous la forme d'une poudre constituée de particules ayant un diamètre moyen en masse compris entre 300 et 1 500 microns et une distribution granulométrique telle que le rapport du diamètre moyen en masse, Dm, au diamètre moyen au nombre, Dn, des particules est inférieur ou égal à 3,5,

  c) l'homogénéisation du lit fluidisé et l'élimination de la chaleur dégagée par la polymérisation ou copolymérisation sont réalisées à l'aide uniquement du courant gazeux ascendant, circulant à travers le lit fluidisé selon une vitesse de fluidisation égale à 5 à 10 fois la vitesse minimum de fluidisation.

2. Procédé selon la revendication 1, caractérisé en ce que le prépolymère contient, par gramme, entre $4 \times 10^{-3}$ et $3 \times 10^{-2}$ mmol de métal de transition.

3. Procédé selon la revendication 1, caractérisé en ce que le prépolymère se présente sous la forme de particules ayant un diamètre moyen en masse compris entre 100 et 240 microns.

4. Procédé selon la revendication 1, caractérisé en ce que le prépolymère présente une distribution granulométrique telle que le rapport Dm/Dn du diamètre moyen en masse au diamètre moyen en nombre des particules est compris entre 1,1 et 2,5.

5. Procédé selon la revendication 1, caractérisé en ce que le prépolymère présente une distribution granulométrique telle que le rapport Dm/Dn est compris entre 1,5 et 2,5.

6. Procédé selon la revendication 1, caractérisé en ce que le prépolymère présente une distribution granulométrique telle que le rapport Dm/Dn est compris entre 1,1 et 1,5.

7. Procédé selon la revendication 1, caractérisé en ce que le prépolymère se présente sous la forme de particules ayant une distribution granulométrique telle que plus de 90 % en poids des particules sont compris dans la fourchette Dm ± 10 %.

8. Procédé selon la revendication 1, caractérisé en ce que le prépolymère ne contient pas de composés minéraux à base d'oxydes réfractaires, tels que l'alumine, la silice et la magnésie.

9. Procédé selon la revendication 1, caractérisé en ce que la mise en contact d'une ou plusieurs alpha-oléfines avec le système catalytique comporte une étape préalable, dite étape d'enrobage du catalyseur, ladite étape d'enrobage étant effectuée en milieu d'hydrocarbure liquide dans des conditions de polymérisation telles que le catalyseur enrobé obtenu contient de 0,1 à 10 g de polymère par mmol de métal de transition.

10. Procédé selon la revendication 1, caractérisé en ce que le polymère ou le copolymère d'alpha-oléfines contient, par gramme, moins de $2 \times 10^{-4}$ mmol de métal de transition.

11. Procédé selon la revendication 1, caractérisé en ce que le polymère ou le copolymère d'alpha-oléfines se présente sous la forme d'une poudre constituée de particules ayant un diamètre moyen en masse compris entre 600 et 1 200 microns.

12. Procédé selon la revendication 1, caractérisé en ce que le polymère ou le copolymère d'alpha-oléfines présente une distribution granulométrique telle que le rapport Dm/Dn est compris entre 1,2 et 3.

13. Procédé selon la revendication 1, caractérisé en ce que les conditions de polymérisation ou de copolymérisation en lit fluidisé sont telles que la vitesse de fluidisation est comprise entre 40 et 80 cm/s.

14. Procédé selon la revendication 1, caractérisé en ce que le catalyseur est constitué par un support solide à base essentiellement d'un composé de magnésium, sur lequel a été déposé un composé de métal de transition, appartenant aux groupes IV, V, et VI de la Classification Périodique des éléments.

15. Procédé selon la revendication 14, caractérisé en ce que le composé de magnésium est le chlorure de magnésium.

16. Procédé selon la revendication 14, caractérisé en ce que le composé de métal de transition est un composé du titane.

17. Procédé selon la revendication 16, caractérisé en ce que le composé du titane est déposé sur le support solide par précipitation, cette précipitation étant réalisée par une réaction de réduction, en présence du support solide, d'un composé du titane à sa valence maximale de formule $Ti(OR_7)_{4-n}X_n$, dans laquelle $R_7$ est un groupement alcoyle contenant 2 à 6 atomes de carbones, X est un atome de chlore ou de brome et n est un nombre entier ou fractionnaire tel que $1 \leq n \leq 4$, au moyen d'un agent réducteur choisi parmi les organomagnésiens de formule $R_8MgR_9$ dans laquelle $R_8$ et $R_9$ sont des groupements alcoyle contenant 2 à 12 atomes de carbone, les organozinciques de formule $Zn(R_{10})_{(2-y)}X_y$, dans laquelle $R_{10}$ est un groupement alcoyle ayant 2 à 12 atomes de carbone, X est le chlore ou le brome et y est un nombre entier ou fractionnaire tel que $0 \leq y \leq 1$, les composés organoaluminiques de formule $Al(R_{11})_{(3-x)}X_x$, dans laquelle $R_{11}$ est un groupement alcoyle ayant 2 à 12 atomes de carbone, X est le chlore ou le brome et x est un nombre entier ou fractionnaire tel que $0 \leq x \leq 2$, ladite réaction étant éventuellement réalisée en présence d'un composé donneur d'électron, choisi parmi les composés organiques comprenant au moins un atome d'oxygène, de soufre, d'azote et/ou de phosphore, et de préférence parmi les éthers aliphatiques de formule $R_{12}$-$OR_{13}$, dans laquelle $R_{12}$ et $R_{13}$, identiques ou différents, sont choisis parmi les groupements alcoyle ayant 1 à 12 atomes de carbone.

18. Procédé selon la revendication 17, caractérisé en ce que le support solide est imprégné à l'aide du composé organomagnésien, organozincique ou organoaluminique et, qu'ensuite, le produit résultant est traité à l'aide du composé de titane de formule $Ti(OR)_{4-n}X_n$.

**19.** Procédé selon la revendication 16, caractérisé en ce que le catalyseur est constitué par un support solide à base de chlorure de magnésium qui est, préalablement, traité à l'aide d'un composé donneur d'électron du type ester d'acide aromatique ou du type éther aromatique, et sur lequel a été déposé du tétrachlorure de titane par imprégnation.

**20.** Procédé selon la revendication 16, caractérisé en ce que le support solide a un diamètre moyen en masse compris entre 10 et 100 microns, en ce que le prépolymère a un diamètre moyen en masse compris entre 100 et 300 microns et en ce que le polymère ou le copolymère produit a un diamètre moyen en masse compris entre 300 et 1 500 microns.

**21.** Procédé selon la revendication 20, caractérisé en ce que la distribution granulométrique du prépolymère est telle que le rapport Dm/Dn des particules est inférieur ou égal à 1,3.

**22.** Procédé selon la revendication 20, caractérisé en ce que la distribution granulométrique du support solide est telle que plus de 90 % en poids des particules sont compris dans la fourchette Dm ± 10 %.

**23.** Poudre de prépolymère d'alpha-oléfines destinée à la polymérisation ou copolymérisation des alpha-oléfines en phase gazeuse, contenant un système catalytique actif comprenant un catalyseur à base de magnésium, d'halogène et d'un métal de transition des groupes IV, V et VI de la classification Périodique des éléments, et un cocatalyseur à base d'au moins un composé organo-aluminique, en quantité telle que le rapport atomique Al/métal de transition est compris entre 0,5 et 200 et que la teneur en métal de transition est de $2 \times 10^{-3}$ à $10^{-1}$ mmol de métal de transition par gramme de prépolymère, cette poudre de prépolymère étant constituée de particules de diamètre moyen en masse compris entre 80 et 300 $\mu$m et d'une distribution granulométrique telle que le rapport Dm/Dn est inférieur ou égal à 3.

**24.** Poudre de prépolymère d'alpha-oléfine selon la revendication 23, caractérisée en ce qu'elle est exempte de tout composé minéral à base d'oxyde réfractaire.

**25.** Poudre de prépolymère d'alpha-oléfine selon la revendication 23, caractérisée en ce qu'elle est constituée de particules de diamètre moyen en masse compris entre 100 et 240 $\mu$m.

**26.** Poudre de prépolymère d'alpha-oléfine selon la revendication 23, caractérisée en ce qu'elle est constituée de particules de distribution granulométrique telle que le rapport Dm/Dn est inférieur ou égal à 1,3.

**27.** Poudre d'homopolymère de l'éthylène ou de copolymère de plus de 50 % en mol d'éthylène avec au moins une alpha-oléfine comportant de trois à huit atomes de carbone, poudre contenant du titane, ayant une teneur inférieure à $5 \times 10^{-4}$ mmol de titane par gramme, une teneur en résidus inorganiques inférieure à 350 ppm et une masse volumique apparente comprise entre 0,45 et 0,52 g/cm$^3$, et étant constituée de particules de diamètre moyen en masse compris entre 600 et 1200 $\mu$m et d'une distribution granulométrique telle que le rapport Dm/Dn est inférieur ou égal à 3,5.

**28.** Poudre de polyoléfine selon la revendication 27, caractérisée en ce qu'elle contient par gramme moins de $2 \times 10^{-4}$ mmol de titane et qu'elle a une teneur en résidus inorganiques inférieure à 150 ppm.

**Claims**

**1.** Process for the production of polyolefins comprising in a first stage the contacting of one or more $\alpha$-olefins with a catalyst system of the Ziegler type, on the one hand comprising a solid catalyst occuring in the form of particles and containing basically atoms of halogen, magnesium and a transition metal belonging to Groups IV, V and VI of the Periodic Table of Elements, and on the other hand of a cocatalyst consisting of organometallic compounds of a metal of Groups I to III of the said Table, to obtain a prepolymer in the form of particles, then in a second stage comprising the contacting of the said prepolymer with one or more $\alpha$-olefins to produce continuously a polymer or copolymer of $\alpha$-olefins directly in the form of a powder consisting of particles, under conditions of polymerisation or copolymerisation in the gas phase by means of a fluid-bed reactor in which the particles of prepolymer and polymer or copolymer of $\alpha$-olefins are maintained in the fluidised state by means of a rising gas stream comprising the $\alpha$-olefin or $\alpha$-olefins to be polymerised, this process being characterised, in that:

a) the prepolymer contains per gramme between $2 \cdot 10^{-3}$ and $10^{-1}$ mmol of transition metal and occurs in the form of particles having a mean diameter by mass comprised between 80 and 300 $\mu$m and a particle size distribution such that the ratio of the mean diameter by mass Dm to the mean diameter by number Dn is less than or equal to 3,

b) the polymer or copolymer of $\alpha$-olefins present in the fluid-bed reactor contains per gramme less than $5 \cdot 10^{-4}$ mmol of transition metal and occurs in the form of a powder consisting of particles having a mean diameter by mass comprised between 300 and 1500 $\mu$m and a particle size distribution such that the ratio of the mean diameter by mass Dm to the mean diameter by number Dn of the particles is less than or equal to 3.5,

c) the homogenisation of the fluid bed and the elimination of the heat given off by the polymerisation or copolymerisation are achieved by means solely of the rising gas stream circulating through the fluid bed at a fluidisation speed equal to 5 to 10 times the minimum speed of fluidisation.

2. Process according to claim 1, characterised in that the prepolymer contains per gramme between $4 \cdot 10^{-3}$ and $3 \cdot 10^{-2}$ mmol of transition metal.

3. Process according to claim 1, characterised in that the prepolymer occurs in the form of particles having a mean diameter by mass comprised between 100 and 240 $\mu$m.

4. Process according to claim 1, characterised in that the prepolymer has a particle size distribution such that the Dm/Dn ratio of the mean diameter by mass to the mean diameter by number of the particles is comprised between 1.1 and 2.5.

5. Process according to claim 1, characterised in that the prepolymer has a particle size distribution such that the Dm/Dn ratio is comprised between 1.5 and 2.5.

6. Process according to claim 1, characterised in that the prepolymer has a particle size distribution such that the Dm/Dn ratio is comprised between 1.1 and 1.5.

7. Process according to claim 1, characterised in that the prepolymer occurs in the form of particles having a particle size distribution such that over 90 % by weight of the particles are comprised in the range Dm ± 10 %.

8. Process according to claim 1, characterised in that the prepolymer does not contain any mineral compound based on refractory oxides, such as alumina, silica and magnesia.

9. Process according to claim 1, characterised in that the contacting of one or more $\alpha$-olefins with the catalyst system comprises a prior stage, known as the catalyst coating stage, the said coating stage being performed in a liquid hydrocarbon medium under conditions of polymerisation such that the coated catalyst obtained contains from 0.1 to 10 g of polymer per millimole of transition metal.

10. Process according to claim 1, characterised in that the polymer or copolymer of $\alpha$-olefins contains per gramme less than $2 \cdot 10^{-4}$ mmol of transition metal.

11. Process according to claim 1, characterised in that the polymer or copolymer of $\alpha$-olefins occurs in the form of a powder consisting of particles having a mean diameter by mass comprised between 600 and 1200 $\mu$m.

12. Process according to claim 1, characterised in that the polymer or copolymer of $\alpha$-olefins has a particle size distribution such that the Dm/Dn ratio is comprised between 1.2 and 3.

13. Process according to claim 1, characterised in that the conditions of polymerisation or copolymerisation in a fluid bed are such that the fluidisation speed is comprised between 40 and 80 cm/s.

14. Process according to claim 1, characterised in that the catalyst consists of a solid support based essentially on a magnesium compound, on which has been deposited a compound of a transition metal belonging to Groups IV, V and VI of the Periodic Table of Elements.

15. Process according to claim 14, characterised in that the magnesium compound is magnesium chloride.

16. Process according to claim 14, characterised in that the transition metal compound is a titanium compound.

17. Process according to claim 16, characterised in that the titanium compound is deposited on the solid support by precipitation, this precipitation being performed by a reduction reaction in the presence of the solid support, of a titanium compound at its maximum valency with the formula $Ti(OR_7)_{4-n}X_n$, in which $R_7$ is an alkyl group containing 2 to 6 carbon atoms, X is an atom of chlorine or bromine and n is an integer or fraction such that $1 \leq n \leq 4$, by means of a reducing agent chosen from amongst
- the organo-magnesium compounds of formula $R_8MgR_9$ in which $R_8$ and $R_9$ are alkyl groups containing 2 to 12 carbon atoms,
- organo-zinc compounds of the formula $Zn(R_{10})_{(2-y)}X_y$, in which $R_{10}$ is an alkyl group having 2 to 12 carbon atoms, X is chlorine or bromine and y is an integer or fraction such that $0 \leq y \leq 1$,
- the organo-aluminium compounds of the formula $Al(R_{11})_{(3-x)}X_x$, in which $R_{11}$ is an alkyl group having 2 to 12 carbon atoms, X is chlorine or bromine and x is an integer or fraction such that $0 \leq x \leq 2$,

the said reaction optionally being performed in the presence of an electron donor compound, chosen from amongst the organic compounds comprising at least one atom of oxygen, sulphur, nitrogen and/or phosphorus, and preferably from amongst the aliphatic ether oxides of the formula $R_{12}$-$OR_{13}$, in which $R_{12}$ and $R_{13}$ which are identical or different, are chosen from amongst the alkyl groups having 1 to 12 carbon atoms.

18. Process according to claim 17, characterised in that the solid support is impregnated by means of the organo-magnesium, organo-zinc or organo-aluminium compound, and that the resultant product is the treated by means of the titanium compound of the formula $Ti(OR)_{4-n}X_n$.

19. Process according to claim 16, characterised in that the catalyst consists of a solid support based on magnesium chloride which is previously treated by means of an electron donor compound of the aromatic ester or aromatic ether type, and on which there has been deposited titanium tetrachloride by impregnation.

20. Process according to claim 16, characterised in that the solid support has a mean diameter by mass comprised between 10 and 100 $\mu$m, in that the prepolymer has a mean diameter by mass comprised between 100 and 300 $\mu$m and in that the polymer or copolymer produced has a mean diameter by mass comprised between 300 and 1500 $\mu$m.

21. Process according to claim 20, characterised in that the particle size distribution of the prepolymer is such that the Dm/Dn ratio of the particles is less than or equal to 1.3.

22. Process according to claim 20, characterised in that the particle size distribution of the solid support ist such that over 90 % by weight of the particles are comprised within the range of Dm $\pm$ 10 %.

23. Powder of a prepolymer of an $\alpha$-olefin designated for the polymerisation or copolymerisation of $\alpha$-olefines in the gas phase, containing an active catalytic system, which comprises a catalyst based on magnesium, a halogen and a transition metal belonging to Groups IV, V and VI of the Periodic Table of Elements, and a cocatalyst based on at least one organo-aluminium compound in such an amount that the atomic ratio Al/transition metal is in the range from 0.5 to 200 and the transition metal content is $2 \cdot 10^{-3}$ to $10^{-1}$ mmol transition metal per gramme of prepolymer, whereby the prepolymer powder consists of particles having a mean diameter by mass comprised between 80 and 300 $\mu$m and a particle size distribution such that the Dm/Dn ratio is less than or equal to 3.

24. Powder of a prepolymer of an $\alpha$-olefin according to claim 23, characterised in that it does not contain any inorganic compound based on refractory oxides.

25. Powder of a prepolymer of an $\alpha$-olefin according to claim 23, characterised in that it consists of particles having a mean diameter by mass comprised between 100 and 240 $\mu$m.

26. Powder of a prepolmer of an $\alpha$-olefin according to claim 23, characterised in that it consists of particles having such a particle size distribution that the ratio Dm/Dn is less than or equal to 1.3.

27. Powder of a homopolymer of ethylene or powder of a copolymer of more than 50 mol-% of ethylene with at least one $\alpha$-olefin having three to eight carbon atoms, whereby the powder contains titanium, the concentration of titanium is lower than $5 \cdot 10^{-4}$ mmol titanium per gramme, the concentration of inorganic rests is lower than 350 ppm and the apparent density is comprised between 0.45 and 0.52 g/cm$^3$ and the powder consists of particles having a mean diameter by mass comprised between 600 and 1200 $\mu$m and a particle size distribution, such that the ratio Dm/Dn is less than or equal to 3.5.

**28.** Powder of a polyolefin according to claim 27, characterised in that it contains less than $2 \cdot 10^{-4}$ mmol titanium per gramme and that the concentration of inorganic rests is lower than 150 ppm.

## Patentansprüche

**1.** Verfahren zur Herstellung von Polyolefinen, das umfaßt:

- In einer ersten Stufe das Inkontaktbringen von einem oder mehreren $\alpha$-Olefinen mit einem Katalysator-System vom Ziegler-Typ, das einerseits einen festen, in Form von Partikeln vorliegenden Katalysator, der im wesentlichen Halogen-, Magnesium- und Übergangsmetallatome eines Übergangsmetalls der IV., V. und VI. Gruppe des Periodensystems der Elemente und andererseits einen Cokatalysator enthält, der aus metallorganischen Verbindungen eines Metalls der I. bis III. Gruppe des Periodensystems besteht, zur Herstellung eines in Form von Partikeln vorliegenden Prepolymers,

- in einer zweiten Stufe das Inkontaktbringen dieses Prepolymers mit einem oder mehreren $\alpha$-Olefinen zur kontinuierlichen Herstellung eines Polymers oder eines Copolymers von $\alpha$-Olefinen unmittelbar in Form eines aus Partikeln bestehenden Pulvers unter den Bedingungen der Polymerisation oder der Copolymerisation in der Gasphase in einem Fließbettreaktor, in dem die Partikeln des Prepolymers und des Polymers bzw. des Copolymers des $\alpha$-Olefins oder der $\alpha$-Olefine durch einen aufsteigenden Gasstrom, der das oder die zu polymerisierenden $\alpha$-Olefine enthält, in einem Fließzustand gehalten werden,

wobei das Verfahren dadurch gekennzeichnet ist, daß

a) das Prepolymer pro Gramm $2 \cdot 10^{-3}$ bis $10^{-1}$ mmol Übergangsmetall enthält und in Form von Partikeln vorliegt, die einen massebezogenen mittleren Durchmesser von 80 bis 300 $\mu$m und eine solche Korngrößenverteilung aufweisen, daß das Verhältnis des massebezogenen mittleren Durchmessers Dm zum auf die Anzahl bezogenen mittleren Durchmesser Dn kleiner als oder gleich 3 ist,

b) das in dem Fließbettreaktor vorhandene Polymer oder Copolymer aus $\alpha$-Olefinen pro Gramm weniger als $5 \cdot 10^{-4}$ mmol Übergangsmetall enthält und in Form eines Pulvers vorliegt, das aus Partikeln besteht, die einen massebezogenen mittleren Durchmesser von 300 bis 1500 $\mu$m und eine solche Korngrößenverteilung aufweisen, daß das Verhältnis des massebezogenen mittleren Durchmessers Dm zum auf die Anzahl bezogenen mittleren Durchmesser Dn der Partikeln kleiner als oder gleich 3,5 ist,

c) die Homogenisierung des Fließbettes und die Entfernung der bei der Polymerisation oder Copolymerisation freigesetzten Wärme einzig mit dem aufsteigenden Gasstrom erzielt wird, der durch das Fließbett mit einer Wirbelgeschwindigkeit zirkuliert, die fünf- bis zehnmal so groß ist wie die minimale Wirbelgeschwindigkeit.

**2.** Verfahren nach Anspruch 1, dadurch gekennzeichnet, daß das Prepolymer pro Gramm $4 \cdot 10^{-3}$ bis $3 \cdot 10^{-2}$ mmol Übergangsmetall enthält.

**3.** Verfahren nach Anspruch 1, dadurch gekennzeichnet, daß das Prepolymer in Form von Partikeln vorliegt, die einen massebezogenen mittleren Durchmesser von 100 bis 240 $\mu$m aufweisen.

**4.** Verfahren nach Anspruch 1, dadurch gekennzeichnet, daß das Prepolymer eine solche Korngrößenverteilung aufweist, daß das Verhältnis Dm/Dn des massebezogenen mittleren Durchmessers zum auf die Anzahl bezogenen mittleren Durchmesser der Partikeln 1,1 bis 2,5 beträgt.

**5.** Verfahren nach Anspruch 1, dadurch gekennzeichnet, daß das Prepolymer eine solche Korngrößenverteilung aufweist, daß das Verhältnis Dm/Dn 1,5 bis 2,5 beträgt.

**6.** Verfahren nach Anspruch 1, dadurch gekennzeichnet, daß das Prepolymer eine solche Korngrößenverteilung aufweist, daß das Verhältnis Dm/Dn 1,1 bis 1,5 beträgt.

**7.** Verfahren nach Anspruch 1, dadurch gekennzeichnet, daß das Prepolymer in Form von Partikeln vorliegt, die eine solche Korngrößenverteilung aufweisen, daß mehr als 90 Gew.-% der Partikeln innerhalb einer Spanne von Dm von ± 10 % liegen.

**8.** Verfahren nach Anspruch 1, dadurch gekennzeichnet, daß das Prepolymer keine anorganischen Verbindungen auf der Basis von feuerfesten Oxiden, wie z.B. Aluminiumoxid, Siliciumdioxid und Magnesiumoxid, enthält.

9. Verfahren nach Anspruch 1, dadurch gekennzeichnet, daß das Inkontaktbringen von einem oder mehreren α-Olefinen mit dem Katalysatorsystem eine vorhergehende Stufe aufweist, die als Stufe zur Umhüllung des Katalysators bezeichnet wird, wobei diese Stufe zur Umhüllung in einem Medium aus einem flüssigen Kohlenwasserstoff unter solchen Polymerisationsbedingungen durchgeführt wird, daß der hergestellte umhüllte Katalysator 0,1 bis 10 g Polymer pro Millimol Übergangsmetall enthält.

10. Verfahren nach Anspruch 1, dadurch gekennzeichnet, daß das Polymer oder das Copolymer aus α-Olefinen pro Gramm weniger als $2 \cdot 10^{-4}$ mmol Übergangsmetall enthält.

11. Verfahren nach Anspruch 1, dadurch gekennzeichnet, daß das Polymer oder das Copolymer aus α-Olefinen in Form eines Pulvers vorliegt, das aus Partikeln besteht, die einen massebezogenen mittleren Durchmesser von 600 bis 1200 $\mu$m aufweisen.

12. Verfahren nach Anspruch 1, dadurch gekennzeichnet, daß das Polymer oder das Copolymer aus α-Olefinen eine solche Korngrößenverteilung aufweist, daß das Verhältnis Dm/Dn 1,2 bis 3 beträgt.

13. Verfahren nach Anspruch 1, dadurch gekennzeichnet, daß die Polymerisationsbedingungen oder die Copolymerisationsbedingungen in dem Fließbett so sind, daß die Wirbelgeschwindigkeit 40 bis 80 cm/s beträgt.

14. Verfahren nach Anspruch 1, dadurch gekennzeichnet, daß der Katalysator aus einem festen Träger, der im wesentlichen auf einer Magnesiumverbindung basiert, und einer Verbindung eines Übergangsmetalls der IV., V. und VI. Gruppe des Periodensystems der Elemente besteht, die auf dem festen Träger abgeschieden worden ist.

15. Verfahren nach Anspruch 14, dadurch gekennzeichnet, daß die Magnesiumverbindung Magnesiumchlorid ist.

16. Verfahren nach Anspruch 14, dadurch gekennzeichnet, daß die Übergangsmetallverbindung eine Titanverbindung ist.

17. Verfahren nach Anspruch 16, dadurch gekennzeichnet, daß die Titanverbindung auf dem festen Träger durch Ausfällen abgeschieden wird, wobei zur Durchführung dieser Fällung eine Titanverbindung von maximaler Wertigkeit der Formel $Ti(OR_7)_{4-n}X_n$, worin $R_7$ eine Alkylgruppe mit 2 bis 6 Kohlenstoffatomen, X ein Chlor- oder Bromatom und n eine ganze Zahl oder eine Bruchzahl mit $1 \leq n \leq 4$ darstellen, in Gegenwart des festen Trägers mit einem Reduktionsmittel reduziert wird, das ausgewählt ist unter:

- magnesiumorganischen Verbindungen der Formel $R_8MgR_9$, in der $R_8$ und $R_9$ Alkylgruppen mit 2 bis 12 Kohlenstoffatomen sind,

- zinkorganischen Verbindungen der Formel $Zn(R_{10})_{(2-y)}X_y$, in der $R_{10}$ eine Alkylgruppe mit 2 bis 12 Kohlenstoffatomen, X Chlor oder Brom und y eine ganze Zahl oder eine Bruchzahl mit $0 \leq y \leq 1$ ist, und

- aluminiumorganischen Verbindungen der Formel $Al(R_{11})_{(3-x)}X_x$, in der $R_{11}$ eine Alkylgruppe mit 2 bis 12 Kohlenstoffatomen, X Chlor oder Brom und x eine ganze Zahl oder eine Bruchzahl mit $0 \leq x \leq 2$ ist,

wobei diese Reaktion gegebenenfalls in Gegenwart einer Elektronendonorverbindung durchgeführt wird, die unter organischen Verbindungen, die mindestens ein Sauerstoff-, Schwefel-, Stickstoff- und/oder Phosphoratom enthalten, und vorzugsweise unter aliphatischen Ethern der Formel $R_{12}$-O-$R_{13}$ ausgewählt ist, worin $R_{12}$ und $R_{13}$, die gleich oder verschieden sind, unter Alkylgruppen mit 1 bis 12 Kohlenstoffatomen ausgewählt sind.

18. Verfahren nach Anspruch 17, dadurch gekennzeichnet, daß der feste Träger mit einer magnesiumorganischen, zinkorganischen oder aluminiumorganischen Verbindung imprägniert wird und daß das hergestellte Produkt anschließend mit einer Titanverbindung der Formel $Ti(OR)_{4-n}X_n$ behandelt wird.

19. Verfahren nach Anspruch 16, dadurch gekennzeichnet, daß der Katalysator aus einem festen Träger auf der Basis von Magnesiumchlorid besteht, das zuvor mit einer Elektronendonorverbindung vom Typ der Ester aromatischer Säuren oder vom Typ aromatischer Ether behandelt worden ist und auf dem durch Imprägnieren ein Niederschlag aus Titantetrachlorid gebildet worden ist.

20. Verfahren nach Anspruch 16, dadurch gekennzeichnet, daß der feste Träger einen massebezogenen mittleren Durchmesser von 10 bis 100 $\mu$m, das Prepolymer einen massebezogenen mittleren Durchmesser von 100 bis 300 $\mu$m und das hergestellte Polymer oder Copolymer einen massebezogenen mittleren Durchmesser von 300 bis 1500 $\mu$m aufweist.

21. Verfahren nach Anspruch 20, dadurch gekennzeichnet, daß das Prepolymer eine solche Korngrößenverteilung aufweist, daß das Verhältnis Dm/Dn der Partikeln kleiner als oder gleich 1,3 ist.

22. Verfahren nach Anspruch 20, dadurch gekennzeichnet, daß der feste Träger eine solche Korngrößenverteilung aufweist, daß mehr als 90 Gew.-% der Partikeln in einer Spanne von Dm von ± 10 % liegen.

23. Prepolymerpulver aus einem $\alpha$-Olefin, das für die Polymerisation oder Copolymerisation von $\alpha$-Olefinen in der Gasphase bestimmt ist, welches ein aktives Katalysatorsystem enthält, das einen Katalysator auf der Basis von Magnesium, eines Halogens und eines Übergangsmetalls der IV., V. und VI. Gruppe des Periodensystems der Elemente und einen Cokatalysator auf der Basis von mindestens einer aluminiumorganischen Verbindung in solchen Mengen enthält, daß das Atomverhältnis Al/Übergangsmetall 0,5 bis 200 beträgt und der Gehalt an Übergangsmetall $2 \cdot 10^{-3}$ bis $10^{-1}$ mmol Übergangsmetall pro Gramm Prepolymer beträgt, wobei dieses Prepolymerpulver aus Partikeln mit einem massebezogenen mittleren Durchmesser von 80 bis 300 $\mu$m und einer solchen Korngrößenverteilung besteht, daß das Verhältnis Dm/Dn kleiner als oder gleich 3 ist.

24. Prepolymerpulver aus einem $\alpha$-Olefin nach Anspruch 23, dadurch gekennzeichnet, daß es keinerlei anorganische Verbindungen auf der Basis von feuerfesten Oxiden enthält.

25. Prepolymerpulver aus einem $\alpha$-Olefin nach Anspruch 23, dadurch gekennzeichnet, daß es aus Partikeln mit einem massebezogenen mittleren Durchmesser von 100 bis 240 $\mu$m besteht.

26. Prepolymerpulver aus einem $\alpha$-Olefin nach Anspruch 23, dadurch gekennzeichnet, daß es aus Partikeln mit einer solchen Korngrößenverteilung besteht, daß das Verhältnis Dm/Dn kleiner als oder gleich 1,3 ist.

27. Pulver aus einem Homopolymer aus Ethylen oder einem Copolymer aus mehr als 50 mol-% Ethylen und mindestens einem $\alpha$-Olefin, das 3 bis 8 Kohlenstoffatome aufweist, wobei das Pulver Titan enthält, der Gehalt an Titan kleiner als $5 \cdot 10^{-4}$ mmol Titan pro Gramm des Pulvers und der Gehalt an anorganischen Resten kleiner als 350 ppm ist, die Schüttdichte 0,45 bis 0,52 g/cm$^3$ beträgt und das Pulver aus Partikeln mit einem massebezogenen mittleren Durchmesser von 600 bis 1200 $\mu$m besteht und eine solche Korngrößenverteilung aufweist, daß das Verhältnis Dm/Dn kleiner als oder gleich 3,5 ist.

28. Pulver aus einem Polyolefin nach Anspruch 27, dadurch gekennzeichnet, daß es pro Gramm mindestens $2 \cdot 10^{-4}$ mmol Titan enthält und einen Gehalt an anorganischen Resten unter 150 ppm aufweist.